# EUROPEAN PATENT APPLICATION

(11) **EP 4 803 741 A1**
(43) Date of publication of application: **09.09.2026**
(21) Application number: 25382205.0
(22) Date of filing: 07.03.2025
(51) Int. Cl.: F03D 15/10, F16H 1/46, F16H 37/04, F16H 57/08

(54) **WIND TURBINE GEARBOX AND METHOD OF MOUNTING A WIND TURBINE GEARBOX**

(71) Applicant: Siemens Gamesa Renewable Energy Innovation & Technology S.L., 31621 Sarriguren (Navarra) (ES)
(72) Inventor: Martinez Ciudad, Alvaro, 48902 BARAKALDO (ES); Saenz De Ugarte Sevilla, Patrik, 48940 Leioa (Bizkaia) (ES)
(74) Representative: SGRE-Association

(57) **Abstract**

The invention relates to a wind turbine gearbox (7), for transmitting torque from a rotor (4) to a generator (9), comprising a gearbox axis (15) and two planet stages (12, 13, 14), a first planet stage (12,13) and a second planet stage (13,14), wherein the planet carrier (20, 120, 220, 320) of the second planet stage (13,14)comprises a main body part (22, 222, 322) and a sun wheel shaft part (23, 223, 323) connected to each other. The sun wheel shaft part (23, 223, 323) is meshing with the planet wheels (40, 140, 240, 340) of the first planet stage (12,13). According to the invention, the main body part (22, 222, 322) and the sun wheel shaft part (23, 223, 323) of the planet carrier (20, 120, 220, 320) are joint by a rigid connection (21).

## Description

The present invention relates to a wind turbine gearbox for transmitting torque from a rotor to a generator. The present invention further relates to a wind turbine comprising said wind turbine gearbox. The present invention further relates to a method of mounting a wind turbine gearbox.

Wind turbines are increasingly used for the generation of electrical energy. A wind turbine typically comprises a tower and a nacelle mounted on the tower, to which a rotor is attached. The rotor is coupled to a generator. A plurality of rotor blades extends from the rotor. The blades are oriented in such a way that wind passing over the blades turns the rotor and rotates the shaft, thereby driving the generator to generate electricity.

Wind turbines are in continuous development due to advancements in technology and energy harvesting. Hence, new-generation wind turbines have increased in size compared to older ones. A modern large wind turbine is a wind turbine with a rated power output of more than 5 MW. In the majority of modern large wind turbines, a gearbox is arranged between the wind rotor and the generator to reduce the large torque on the rotor side by increasing the speed on the generator side. The wind turbine gearbox is one of the components which has greatly increased in size as the increased rotor torque and rotor power must be transmitted by the gearbox.

A larger gearbox significantly increases the weight of the wind turbine nacelle, creating a need for larger cranes being able to lift the nacelle on the tower top. In addition, a larger gearbox increases the size of the nacelle, which dimensions are limited by the need of transport on public roads with severe limits on width and heights.

Usually, the torque in wind turbine gearboxes is transmitted from the rotor shaft via an input shaft connection to a planet carrier of a first gearbox planet stage. To the planet carrier, at least three planet wheels are rotatably mounted, which are meshing with both, a hollow wheel and a sun wheel. The sun wheel shaft is usually connected to the input shaft of a following second gearbox stage with a coupling, in particular a teeth coupling allowing for small angle adjustments between the sun wheel and the following gearbox stage. A teeth coupling requires some axial space. Up to four gearbox stages are common in large modern wind turbines which leads to a considerable length of the gearbox.

All this results in a complex geometry and a weight of more than 40 tons for the gearbox for a large wind turbine with more than 5 MW power output.

It is therefore an object of the invention to provide an improved design of a wind turbine gearbox avoiding the disadvantages of the state of the art, in particular for gearboxes for wind turbines with more than 5 MW rated power output. It is in particular an object of the invention to simplify the gearbox design.

It is a further object to reduce the size and the weight of the planet stages of a wind turbine gearbox and to improve the maintainability of a wind turbine gearbox.

This is achieved by a wind turbine gearbox according to claim 1, a wind turbine according to claim 9 and a method of mounting a wind turbine gearbox according to claim 10.

According to the invention, a wind turbine gearbox for transmitting torque from a rotor to a generator comprises a gearbox axis and two planet stages, a first planet stage and a second planet stage, the second planet stage running at higher speed than the first planet stage. The gearbox axis is defined as the symmetry axis of the planet stages, which is at the same time the rotation axis of the sun wheels when deformations due to loading are neglected. If a gearbox comprises more than two stages, e.g. four stages, named stage 1 to stage 4, the first and the second stage can be any one of two neighboring stages, e.g. stage 1 and stage 2 or stage 2 and stage 3 or stage 3 and stage 4. The planet stage with the lowest revolution speed is connected to the rotor, which is driven by the wind. The planet stage with the highest revolution speed is connected to the generator, in some embodiments directly, in other embodiments with a spur gear stage in between. In a spur gear stage, usually the gears are helical gears.

Each planet stage comprises a planet carrier, at least three planet wheels, a hollow wheel and a sun wheel. The planet wheels mesh with both the hollow wheel and the sun wheel. The planet carrier of the second planet stage comprises a main body part and a sun wheel shaft part connected to each other, wherein the main body part is on the generator side of the planet carrier and the sun wheel shaft part is on the rotor side of the planet carrier. The sun wheel shaft part is meshing with the planet wheels of the first planet stage wherein the main body part and the sun wheel shaft part of the planet carrier are joint by a rigid connection.

The wording rigid connection defines that the two parts are connected in such a way that they function as a single, unified part. Rigid connection can also mean that the two parts are integrally connected to each other, e.g. produced in a single casting process. So, in contrast to a usual coupling in the prior art, there is no joint in between the main body part and the sun wheel shaft part allowing for relative movement of one part relative to the other, like angular movement or a radial or axial displacement.

The introduction of a rigid connection between the sun wheel shaft part and the main body part of the planet carrier addresses and resolves several deficiencies known from the prior art.

First of all, eliminating the teeth coupling makes the gearbox simpler. There is a weight saving by replacing the complex coupling by a simple rigid connection. The axial length needed for the coupling can be reduced, thus leading to a shorter axial length of the whole gearbox. The advantageous weight savings by shortening the whole gearbox might be significantly more important than the weight saving due to the eliminated coupling itself. In addition, a coupling, especially a teeth coupling, is always a component underlaying wear in the coupling faces itself and needing maintenance. Advantageously, a rigid connection can be designed much easier for the long lifetime of a wind turbine compared to a flexible coupling. Finally, replacing the coupling by a rigid connection leads advantageously to an overall cost reduction for the gearbox.

Given all these advantages, it looks like a surprise, that the inventive solution of a rigid connection between the main body part and the sun wheel shaft part of the planet carrier has not been realized before in a large wind turbine gearbox.

In fact, similar solutions known from other applications like small gearboxes for turn drives or robotics could not be transferred to large wind turbine gearboxes due to the extreme lifetime requirements on wind turbine gearboxes, which have to withstand 25 to 35 years of continuous operation. This leads to lower specific loading in the wind turbine gearboxes compared to other applications. Lower specific loading implies less elastic deformation in the gearbox parts which are compensating for e.g. manufacturing tolerances in other applications. For that reason, in large prior art wind turbine gearboxes, additional flexibility has been provided by couplings between the sun wheel and the planet carrier of the following gearbox stage. It is the achievement of the inventor to have recognized, that with the modern calculation and simulation methods and the high precision manufacturing methods of today, it is possible to design a gearbox for a large wind turbine with more than 5 MW power output with a rigid connection between the sun wheel shaft part and the main body part of the planet carrier. Hence, the invention fulfils a long-felt need and thereby solves a technical problem which workers in the art have been attempting to solve for a long time.

In a preferred embodiment of the invention, the rigid connection is a forged connection, a casted connection, a bolted connection, a welded connection or a press fit connection.

By forging the connection in one piece, maximum strength of the connection can advantageously be achieved.

Alternatively, casting the connection in one piece provides sufficient strength with a much easier production process, especially if a larger number of parts is needed for a serial production. In this way, an economic production can advantageously be achieved.

In a preferred embodiment of the invention, the casted connection includes casting the connection to a preproduced sun wheel shaft part. Casted parts including preproduced parts which are integrated during the casting process are generally known in the prior art, allowing to integrate structures of different, e.g., higher strength materials into a casted part.

Advantageously, the highly loaded sun wheel shaft part is preproduced in a higher strength steel and is integrated in the mold of the main body part of the planet carrier. During the casting process, a rigid connection between the sun wheel shaft part and the main body part of the planet carrier will be established, allowing to use the expensive high strength material only in the highly loaded spots. Thus, the overall material cost will advantageously be reduced.

Alternatively, the rigid connection is a bolted connection, allowing advantageously to disconnect the rigid connection, e.g. for disassembly or maintenance purposes.

Alternatively, the rigid connection is a welded connection, leading advantageously to the lowest production costs, e.g., if only a small number of parts is needed, and the production of an expensive mold should be avoided.

In a preferred embodiment, the welded connection comprises a heat treatment after the welding process, leading to a higher strength in the welding region and advantageously allowing to compensate for any distortion which might be caused by the welding process.

Alternatively, the rigid connection is a press fit connection, allowing to join the two parts rigidly by compression forces. Especially when the joining process includes heating and/or cooling of one or both of the two parts, the joining process is advantageously simple and cost effective.

According to a preferred embodiment of the invention the gearbox axis in the normal operating position is oriented with less than 20 degrees, preferably less than 10 degrees offset to a horizontal plane.

In a large wind turbine gearbox in which the gearbox axis is oriented with less than 20 degrees offset to a horizontal plane, the invention is particularly advantageous.

A horizontal plane is defined as a plane which is perpendicular to the earth gravity vector, which indicates the direction of the gravity force. In other words and reflecting the original meaning of horizontal, the horizontal plane is the plane of the horizon. In this configuration, the gravity force is acting mainly perpendicular to the gearbox axis and the axis of rotation of the sun wheel. Especially in the low speed gearbox stage, the own weight of a sun wheel of a gearbox for a wind turbine with more than five megawatt is so important, that the sun wheel is always a bit off-centered in direction of gravity just because of its own weight of at least several hundred kilogram. This misalignment leads to asymmetric teeth forces between the sun wheel and the planets, in particular in partial load operation of the wind turbine, when the teeth forces are too small to override the gravity force on the sun wheel. In the conventional gearbox design with a coupling between the sun wheel and the body part of the planet carrier of the next gearbox stage, the sun wheel is mounted in a deflectable way. So, there is no additional force for centering the sun wheel except the teeth forces acting from the planet wheels on the sun wheel. The inventor has recognized that this problem might be solved with the invention by replacing the flexible coupling by a rigid connection between the sun wheel shaft part and the main body part of the planet carrier. As the planet carrier is supported in an preferred embodiment by two planet carrier bearings, the centering forces of the bearings of the planet carrier are transmitted to the sun wheel shaft part, thus acting against the misalignment caused by the gravity forces on the sun wheel.

According to a preferred embodiment of the invention the planet carrier comprises a rotor side cheek and a generator side cheek, wherein the rigid connection between the main body part and the sun wheel shaft part is arranged either between the rotor side cheek and the generator side cheek or on the rotor side of the rotor side cheek.

Advantageously, arranging the rigid connection between the rotor side cheek and the generator side cheek leads to a relatively large radial dimension of the rigid connection resulting in a low specific loading in the rigid connection.

In this way, the risk that the rigid connection might be the cause for a failure is considerably reduced. This is especially advantageous if the rigid connection is designed as a bolted connection, as the loads which can be transferred by bolts are limited. Alternatively, arranging the rigid connection on the rotor side of the rotor side cheek advantageously divides the two parts in functional units with different specific loading. So, the two functional units might be produced with different production processes or out of different materials resulting in an optimized and cost-efficient design.

According to a preferred embodiment of the invention the sun wheel shaft part contains an elastic shaft portion with a decreased bending stiffness by at least 20%, preferably more than 50% compared to the neighboring portions of the sun wheel shaft part.

By introducing an elastic shaft portion, a certain flexibility is allowed for the sun wheel to compensate for asymmetric load distribution to the planet wheels meshing with the sun wheel. By decreasing the bending stiffness by at least 20%, preferably by more than 50% compared to the neighboring portions of the sun wheel shaft part, the stiffness of the sun wheel shaft part is advantageously decreased in a way that in high asymmetric load situations, the sun wheel is allowed to flex away, but under the normal gravity loads due to the own weight of the sun wheel, the sun wheel shaft will not flex away.

According to an alternative preferred embodiment, a certain flexibility for the sun wheel to compensate for asymmetric load distribution to the planet wheels meshing with the sun wheel is realized by only providing one planet carrier bearing, preferably on the generator side of the planet carrier. Advantageously, this embodiment provides enough flexibility without the need to provide an elastic shaft portion, as an elastic shaft portion might be the weakest spot in a highly loaded sun wheel shaft part. Such an embodiment is especially suited for the second and third planet stage of a wind turbine gearbox.

According to a preferred embodiment of the invention the main body part and the sun wheel shaft part are of a different material. The generally lower loaded main body part might advantageously be produced in a more economic material like a cast material and the higher loaded sun wheel shaft part might be produced in a higher strength material, thus leading to an optimized use of material strength resulting in a cost-effective design.

According to a preferred embodiment of the invention the sun wheel shaft part contains a sun wheel part rigidly connected with the sun wheel shaft part, in particular the sun wheel part being of a different material than the rest of the sun wheel shaft part.

Manufacturing a sun wheel part separately from the sun wheel shaft part and joining both parts by a rigid connection advantageously allows to separate the high precision manufacturing process of the sun wheel from the manufacturing of the sun wheel shaft part which requires less precision, thus allowing for a cost reduction. Preferably, the sun wheel part is manufactured in a higher strength material than the sun wheel shaft part, advantageously resulting in optimized use of the material strength leading to a cost-effective manufacturing. The rigid connection between the sun wheel part and the sun wheel part shaft is a second rigid connection additional to the rigid connection between the main body part and the sun wheel shaft part. Preferably, the rigid connection is a press fit connection, thus allowing the sun wheel part to be pressed onto the sun wheel shaft part.

According to another preferred embodiment of the invention one of the materials consists of a casted iron or casted steel material and the other material consists of a forged material or a hardened material. Using casted iron or casted steel for the less loaded components of the inventive gearbox advantageously results in an efficient production process, especially in serial production. Using a forged material and/or a hardened material for the higher loaded components, especially for the sun wheel and for the optional elastic shaft portion advantageously leads to a longer lifetime of the gearbox components exposed to high wear, which is particularly the case for gear teeth and areas which need high flexibility like the elastic shaft portion.

In a preferred embodiment, the main body part is produced with a casted iron or a casted steel, whereas the sun wheel shaft part is produced with a forged material. The teeth of the sun wheel are preferably produced with a hardened material. The hardening might advantageously be a local hardening of the larger sun wheel part or the sun wheel shaft part, which leads to the best adaptation of the material properties to the functional requirements. In embodiments with an additional rigid connection between the sun wheel shaft part and the sun wheel part, best used of material properties is advantageously reached by using three different materials. The main body part might be produced with a casted iron or casted steel material. The sun wheel shaft part might be produced with a higher strength casted iron or casted steel than the main body part, or with a forged material. Preferably, the sun wheel part might be produced in a forged material and/or a hardened material. The possibility of using the different materials for the different parts advantageously allows the expert in the art to choose of the best fitting material for the relevant part under the given design constraints like extreme loads and lifetime requirements.

Another aspect of the invention relates to a wind turbine comprising a gearbox according to the invention.

Another aspect of the invention relates to a method of mounting a wind turbine gearbox with a gearbox axis, comprising the steps of providing a planet carrier comprising a main body part and a sun wheel shaft part which are joint by a rigid connection, mounting the planet carrier in a second planet stage of the wind turbine gearbox, joining the second planet stage of the wind turbine gearbox with a first planet stage of the wind turbine gearbox in a way that a sun wheel of the sun wheel part meshes with planet wheels of the first planet stage of the wind turbine gearbox, and arranging the wind turbine gearbox in a normal operating position wherein the gearbox axis is oriented with less than 20 degrees, preferably less than 10 degrees offset to a horizontal plane.

In a preferred embodiment, the wind turbine gearbox for transmitting torque from a rotor to a generator comprises a gearbox axis and two planet stages, a first planet stage and a second planet stage, the second planet stage running at higher speed than the first planet stage. The gearbox axis is defined as the symmetry axis of the planet stages, which is at the same time the rotation axis of the sun wheels when deformations due to loading are neglected. If a gearbox comprises more than two stages, e.g. four stages, named stage 1 to stage 4, the first and the second stage can be any one of two neighboring stages, e.g. stage 1 and stage 2 or stage 2 and stage 3 or stage 3 and stage 4. The planet stage with the lowest revolution speed is connected to the rotor, which is driven by the wind. The planet stage with the highest revolution speed is connected to the generator, in some embodiments directly, in other embodiments with a spur gear stage in between.

Each planet stage comprises a planet carrier, at least three planet wheels, a hollow wheel and a sun wheel. The planet wheels mesh with both the hollow wheel and the sun wheel. The planet carrier of the second planet stage comprises a main body part and a sun wheel shaft part connected to each other, wherein the main body part is on the generator side of the planet carrier and the sun wheel shaft part is on the rotor side of the planet carrier. The sun wheel shaft part is meshing with the planet wheels of the first planet stage wherein the main body part and the sun wheel shaft part of the planet carrier are joint by a rigid connection.

Rigid connection defines that the two parts are connected in a way that they behave like being a single part. So, in contrast to a usual coupling, there is no joint in between the main body part and the sun wheel shaft part allowing for relative movement of one part relative to the other, like angular movement or a radial or axial displacement.

By mounting the gearbox with a rigid connection between the sun wheel shaft part and the main body part of the planet carrier, the advantages described for the apparatus claims apply respectively. In a preferred embodiment the gearbox is mounted in a position with the gearbox axis being mainly vertically. Advantageously, the gearbox stages can be mounted in a vertical position in a simple manner as the gravity forces are not leading to misalignments when joining the different gearbox stages. After the gearbox stages, in particular the planetary gearbox stages are mounted together, the gearbox will be turned in the normal operating position wherein the gearbox axis is oriented with less than 20 degrees, preferably less than 10 degrees offset to a horizontal plane. In this normal operating position, the invention is particularly advantageous as described above.

According to a preferred embodiment of the invention, the step of providing a planet carrier comprises providing the main body part, providing the sun wheel shaft part, and joining the main body part and the sun wheel shaft part by a bolted connection, a welded connection or by a press fit connection to provide the rigid connection. Providing the main body part and the sun wheel shaft part in completely separated production processes advantageously allows for optimizing the manufacturing and material choice for the specific part. It includes that the manufacturing can be done by a specialized supplier for the specific production process (e.g. forging or casting) resulting in best quality for low costs. Joining the two parts with a bolted, welded, or press fit connection allows for easy joining of the parts with well-defined interfaces resulting in a rigid connection.

According to a another preferred embodiment of the invention, the step of providing a planet carrier comprises providing one of the main body part or the sun wheel shaft part, and providing the other of the main body part or the sun wheel shaft part in a casting process, the casting process providing at the same time the rigid connection to the one of the main body part or the sun wheel shaft part. Casted parts including preproduced parts which are integrated during the casting process are generally known in the prior art, allowing to integrate structures of different, e.g., higher strength materials into a casted part. Advantageously, this embodiment allows for a preproduced part, particularly for a preproduced sun wheel shaft part in a higher strength and/or forged material to be integrated with a casted main body part directly in the casting process. This leads to a very efficient production process as no additional step of joining the two parts is required.

According to another preferred embodiment of the invention, the step of providing the main body part and/or the sun wheel shaft part comprises providing the sun wheel shaft part in a higher strength material and/or a harder material than the main body part. As explained above, this is advantageous as the sun wheel shaft part is generally higher loaded than the main body part and so, the more expensive material is only used where specifically required.

According to another preferred embodiment of the invention, the step of providing a planet carrier comprises providing the main body part and the sun wheel shaft part in one piece by a forging process or a casting process and machining the planet carrier in its final shape comprising a cutting process. Providing the main body part and the sun wheel shaft part in one piece advantageously avoids the step of joining the two parts. As no interface for the joining must be provided, this embodiment allows for the most compact design of the planet carrier, resulting in the lowest weight of the gearbox. Machining the planet carrier in its final shape comprising a cutting process leads advantageously to a fast and efficient production process.

In order to facilitate the understanding of the characteristics of the invention and being an integral part of this specification, some drawing sheets are attached on which figures, with an illustrative but not limiting character, the following is represented:
Figure 1 shows a wind turbine with a wind turbine gearbox for transmitting torque from a wind rotor to a generator according to the invention.
Figure 2 shows a planet stage of a wind turbine gearbox as known in the prior art.
Figure 3 shows a 4-stage gearbox for a wind turbine as known in the prior art.
Figure 4 shows a 4-stage gearbox for a wind turbine according to the invention.
Figure 5 shows a planet carrier according to a first embodiment of the invention.
Figure 6 shows a planet carrier according to another embodiment of the invention.
Figure 7 shows a planet carrier according to another embodiment of the invention.
Figure 8 shows the steps of the method of mounting the inventive wind turbine gearbox

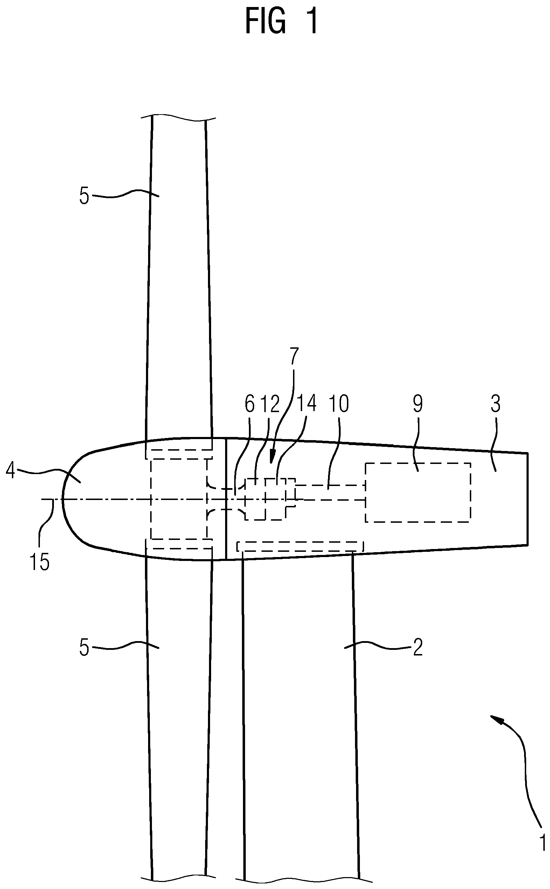

Figure 1 shows a wind turbine 1 with a tower 2 and a nacelle 3. Rotatably attached to the nacelle 3 is a wind rotor 4 with rotor blades 5. The torque generated by the rotor 4 is transmitted via the rotor shaft 6 to the gearbox 7 comprising a first planet stage 12 and a second planet stage 14. In the shown embodiment, the rotor shaft 6 is the input shaft for the first planet stage 12. The gearbox axis 15 is at the same time the rotor axis. The whole nacelle 3 is inclined or tilted a couple of degrees against the horizontal plane to prevent the rotor blades 5 hitting the tower in strong winds. So the gearbox axis 15 in the normal operating position of the wind turbine is oriented with less than 20 degrees, preferably less than ten degrees offset to a horizontal plane. Especially in floating offshore wind turbines 1, due to the tilting of the floating foundation, the gearbox axis 15 might temporarily be inclined in the normal operation position with larger deviations to the horizontal plane than on fixed onshore wind turbines 1. The output torque of the gearbox 7 is transmitted via the high-speed shaft 10 to the generator 9 to produce electricity.

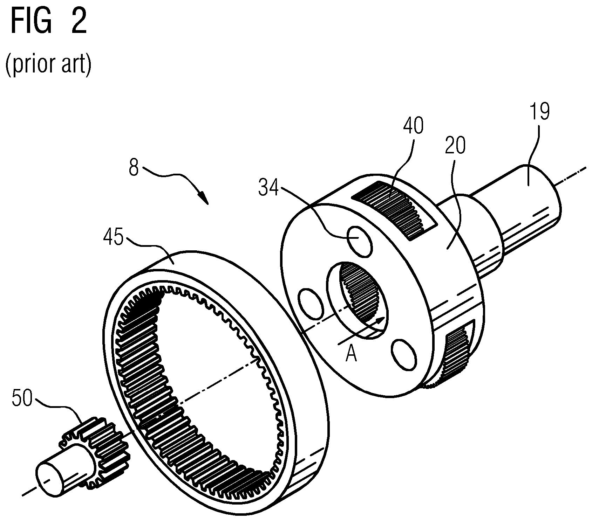

Figure 2 shows a planet stage 12, 14 as known in the prior art. An input shaft 19 transmits torque to a planet carrier 20. Attached to the planet carrier 20 are planet shafts 34, on which planet wheels 40 are rotatably mounted. In the shown embodiment, three planet shafts 34 and three planet wheels 40 are connected to the planet carrier 20. For operation, the hollow wheel 45 will be arranged around the planet carrier 20 and the planets 40 are meshing with the hollow wheel 45. The sun wheel 50 will be introduced in the center of the planet carrier 20 so that the planet wheels 40 are meshing with the sun wheel 50. In some embodiments, the sun wheel 50 is connected to the high-speed shaft 10, in other embodiments, the sun wheel 50 is connected to a different shaft, e.g., an intermediate shaft.

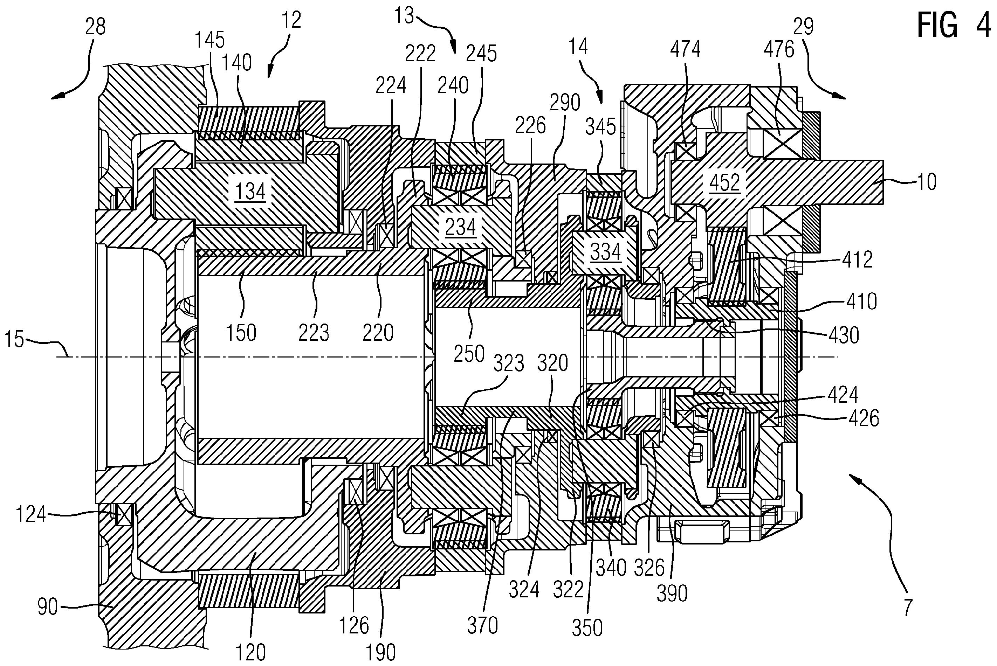

Figure 4 shows a 4-stage gearbox for a wind turbine according to the invention. The gearbox 7 comprises three planet stages 12, 13, 14. The gearbox axis 15 is the symmetry axis of the planet stages 12, 13, 14. Between the third planet stage 14 and the high speed shaft 10 a fourth stage in form of a spur gear stage is arranged. In other embodiments, only one or two planet stages 12, 13, 14 or more planet stages 12, 13, 14 like four or five are arranged in the gearbox 7. The high speed shaft 10 is arranged on the generator side 29 of the gearbox. In the shown embodiment, a torque arm 90 is mounted on the rotor side 28 of the gearbox 7. In other embodiments, the torque arm 90 is replaced by a mounting flange.

Each of the three planet stages 12, 13, 14 comprises a planet carrier 120, 220, 320, with a planet carrier front bearing 124, 224, 324 and a planet carrier rear bearing 126, 226, 326. In other embodiments, the planet carrier 120, 220, 320, has only a planet carrier rear bearing 126, 226, 326. Each planet carrier 120, 220, 320 comprises at least 3 planet wheels 140, 240, 340 mounted on planet bolts 134, 234, 334. The planet wheels 140, 240, 340 are meshing with a hollow wheel 145, 245, 345 and a sun wheel 150, 250, 350. The hollow wheels 145, 245, 345 form part of the gearbox housing and are connected by transition housings 1-2 190 and transition housing 2-3 290. The high speed stage housing 390 is connected to the hollow wheel S3 345 and contains the spur gear stage. The high speed intermediate shaft 410 is connected via an intermediate shaft teeth coupling 430 to the sun wheel S3 350 and is supported by a high speed intermediate shaft front bearing 424 and a high speed intermediate shaft rear bearing 426. The high speed intermediate shaft 410 supports a high speed intermediate gear 412 which meshes with the high speed gear 452. The high speed gear 452 is joint with the high speed shaft 10 which is supported by a high speed shaft front bearing 474 and a high speed shaft rear bearing 476.

The planet carrier S2 220 comprises a main body part S2 222 and a sun wheel shaft part S2 223. The main body part S2 222 is on the generator side 29 and the sun wheel shaft part S2 223 is on the rotor side 28 of the planet carrier S2 220. For this first embodiment of the invention, the first planet stage is the planet stage 1 12. The second planet stage is the planet stage_2 13. The sun wheel shaft part S2 223 is meshing with the planet wheels S1 140 of the planet stage_1 12. The sun wheel shaft part S2 223 and the main body part S2 222 are joint by a rigid connection as they are shown like one piece in Figure 4.

The planet carrier S3 320 comprises a main body part S3 322 and a sun wheel shaft part S3 323. The main body part S3 322 is on the generator side 29 and the sun wheel shaft part S3 323 is on the rotor side 28 of the planet carrier S3 320. For this second embodiment of the invention shown in Figure 4, the first planet stage is the planet stage_2 13. The second planet stage is the planet stage_3 14. The sun wheel shaft part S3 323 is meshing with the planet wheels S2 240 of the planet stage_2 13. The sun wheel shaft part S3 323 and the main body part S3 322 are joint by a rigid connection as they are shown like one piece in Figure 4. The sun wheel shaft part S3 323 comprises an elastic shaft portion S3 370, with a decreased bending stiffness by at least 20% compared to the neighboring portions of the sun wheel shaft part S3 323.

Gravitational forces acting on the sun wheel S1 150 are not able to displace the sun wheel S1 150 or the planet carrier S2 220 as the sun wheel S1 150, the sun wheel shaft part S2 223 and the main body part S2 222 of the planet carrier S2 220 are one rigid part which is supported by two bearings, the planet carrier front bearing S2 224 and the planet carrier rear bearing S2 226. In the shown embodiment, the same is valid for the sun wheel S2 250 respectively due to the planet carrier front bearing S3 324 and the planet carrier rear bearing S3 326.

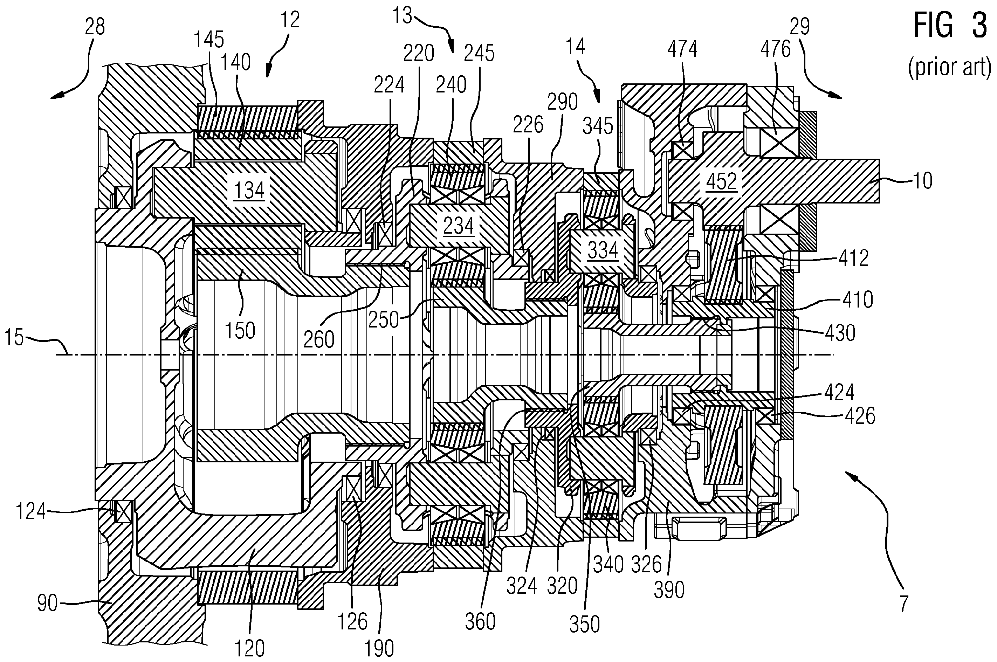

Figure 3 shows a 4-stage gearbox for a wind turbine as known in the prior art. In contrast to the gearbox 7 according to the invention, as discussed with Figure 4, the sun wheels 150 and 250 are attached to the planet carrier 220, 320 via teeth couplings 260, 360. These teeth couplings 260, 360 compensate minor angle deviations or axial or radial displacements between the sun wheels 150, 250 and the planet carrier 220, 320. As the sun wheel S1 150 might have a weight of more than a ton in a gearbox 7 for a large wind turbine 1, it can be easily understood that the sun wheel S1 150 inclines downwards in direction of gravity due to its own weight, flexing the teeth coupling S2 260 a couple of degrees. This unwanted effect is considerably reduced or even avoided with the invention as shown and explained above with the Figure 4.

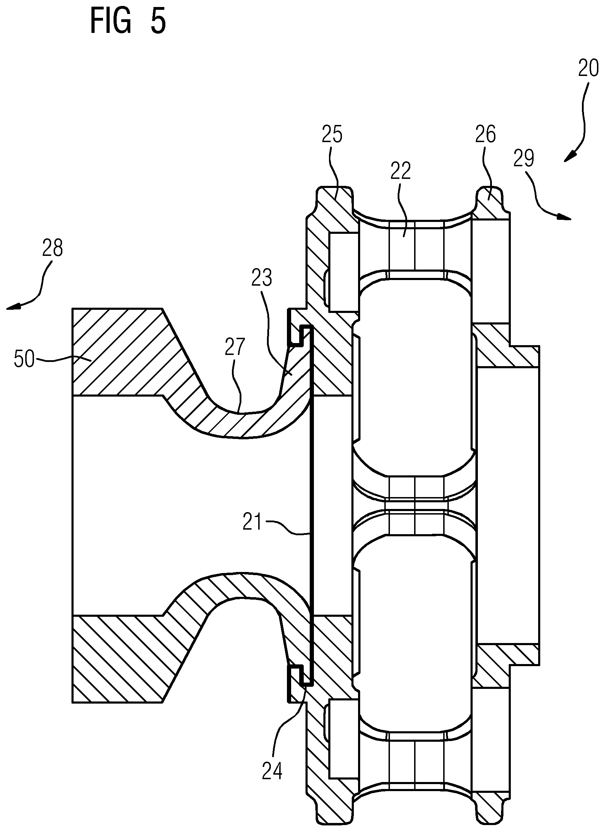

Figure 5 shows a preferred embodiment of a planet carrier 20 comprising a main body part 22 and a sun wheel shaft part 23. The sun wheel shaft part 23 comprises at the rotor side 28 the sun wheel 50. The main body part 22 and the sun wheel shaft part 23 are connected by a rigid connection 21. In the shown embodiment, the rigid connection 21 is shaped with a recess 24 which is joint to the sun wheel shaft part 23 which fits in an undercut at the side of the main body part 22. This geometry allows for joining a preproduced sun wheel shaft part 23 with a casted main body part 22 during the casting process. So, in the shown embodiment, the sun wheel shaft part is first provided including the geometry comprising a recess 24 and then, the main body part 22 is provided in a casting process, the casting process providing at the same time the rigid connection to the sun wheel shaft part 23. The planet carrier 20 comprises a rotor side cheek 25 generator side cheek 26. The rigid connection 21 is arranged on the rotor side 28 of the rotor side cheek 25. This allows for producing the higher loaded sun wheel shaft part 23 in a different material then the main body part 22, e.g the sun wheel shaft part 23 is produced in a higher strength steel in a forging process and the main body part 22 is made out of a casted material like casted iron or casted steel. The sun wheel shaft part 23 comprises an elastic shaft portion 27 with a decreased bending stiffness by at least 20% compared to the neighboring portions of the sun wheel shaft part 23. It is obvious to an expert in the art that the geometry of the rigid connection 21 with the recess 24 is only shown in an exemplary embodiment and that the exact geometry will be defined by an expert during the design process to fulfill the requirements of the loads occurring during the lifetime of the gearbox and the requirements due to the casting process for joining the sun wheel shaft part 23 with the main body part 22.

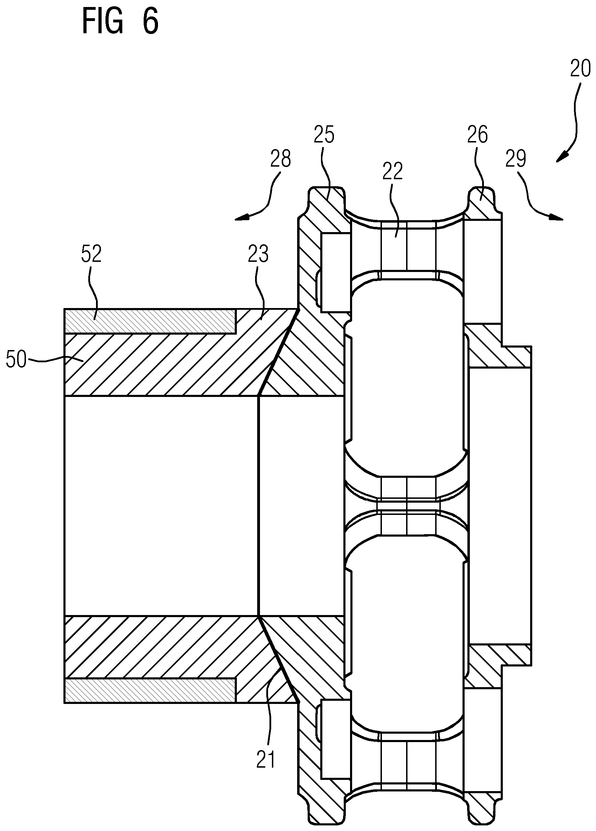

Figure 6 shows another preferred embodiment of a planet carrier 20 comprising a main body part 22 and a sun wheel shaft part 23.

The rigid connection 21 in this embodiment is in one preferred embodiment a welded connection and is arranged on the rotor side 28 of the rotor side cheek 25. In another preferred embodiment, the rigid connection 21 is an integral connection between the main body part 22 and the sun wheel shaft part 23, provided e.g. by producing the two parts in a single production process, e.g. in a single casting process. The sun wheel shaft part 23 contains a sun wheel part 52 rigidly connected to the of sun wheel shaft part 23. The sun wheel part 52 is preferably manufactured in a different material, in particular in a harder steel than the rest of the sun wheel shaft part 23. A forged steel and or a hardened steel fit particularly good to the demands on a sun wheel part 52. In the shown embodiment, the sun wheel part 52 is connected to the sun wheel shaft part 23 with a press fit connection. In this shown embodiment, preferably three different materials are used for the main body part 22, the sun wheel shaft part 23 and the sun wheel part 52, allowing the best fitting materials for the different tasks of each part.

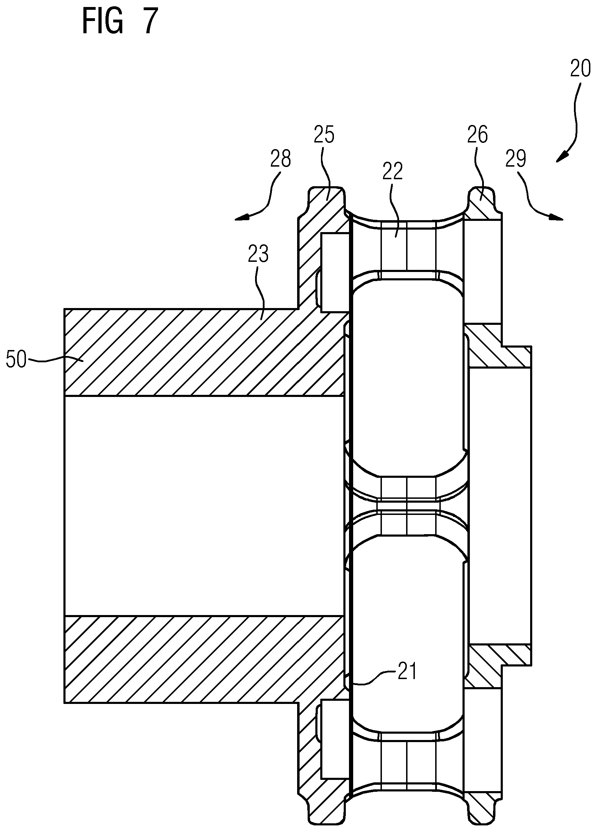

Figure 7 shows another preferred embodiment of a planet carrier 20 comprising a main body part 22 and a sun wheel shaft part 23. In this embodiment, the rigid connection 21 is arranged between the rotor side cheek (25) and the generator side cheek (26) of the planet carrier 20. This arrangement allows for a bolted connection with axial bolts (not shown) through the main body part 22. Preferably, the embodiments without an elastic shaft portion 27 as shown in figure 6 and figure 7 are combined with a support of the planet carrier 20 with only one planet carrier bearing, preferably the planet carrier rear bearing 126, 226, 326, for providing enough flexibility for the sun wheel 50.

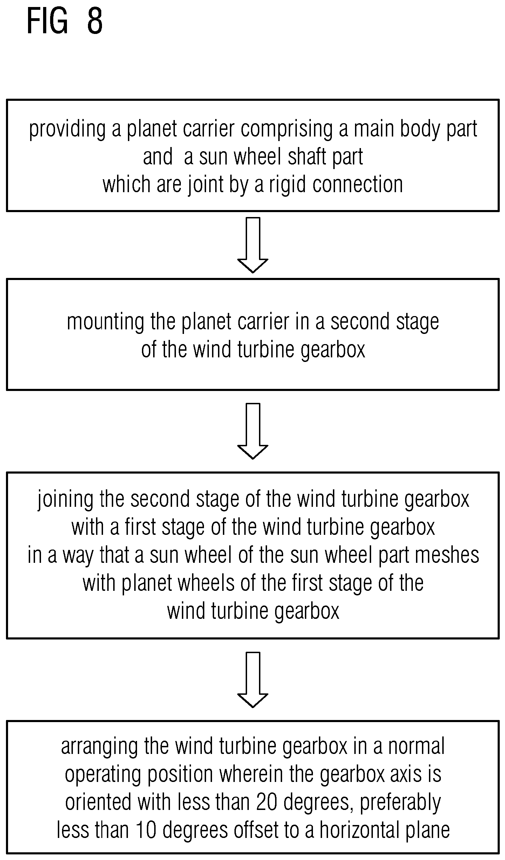

Figure 8 illustrates the method of mounting the inventive wind turbine gearbox 7. In a first step, a planet carrier 20, 220, 320 comprising a main body part 22, 222, 322 and a sun wheel shaft part 23, 223, 323 which are joint by a rigid connection 21 is provided. In an additional step, the planet carrier 20, 220, 320 is mounted in a second planet stage 13, 14 of the wind turbine gearbox 7. Preferably, this mounting step happens with the gearbox axis 15 oriented vertically, as the gravitational force acting in the direction of the gearbox axis 15 allows for simple and save joining of the components of a planetary gearbox. In an additional step, the second planet stage 13, 14 of the wind turbine gearbox 7 is joined with a first planet stage 12, 13 of the wind turbine gearbox 7 in a way that a sun wheel 50, 150, 250 of the sun wheel part 23, 223, 323 meshes with planet wheels 40, 140, 240 of the first planet stage 12, 13 of the wind turbine gearbox 7. Preferably, also this mounting step happens with the gearbox axis oriented vertically, as the gravitational force allows for an easy handling of the components in this vertical orientation. In a last step, the wind turbine gearbox 7 is arranged in a normal operating position wherein the gearbox axis 15 is oriented with less than 20 degrees, preferably less than 10 degrees offset to a horizontal plane.

### Reference list

- 1: Wind Turbine
- 2: Tower
- 3: Nacelle
- 4: Rotor
- 5: Rotor Blade
- 6: Rotor Shaft
- 7: Gearbox
- 9: Generator
- 10: High-Speed Shaft
- 12: Low Speed Planet Stage
- 13: Intermediate Speed Planet Stage
- 14: High Speed Planet Stage
- 15: Gearbox Axis
- 19: Input Shaft
- 20: Planet Carrier
- 21: Rigid Connection
- 22: Main body Part
- 23: Sun Wheel Shaft Part
- 24: Recess
- 25: Rotor Side Cheek
- 26: Generator Side Cheek
- 27: Elastic Shaft Portion
- 28: Rotor Side
- 29: Generator Side
- 34: Planet Shaft
- 40: Planet Wheel
- 45: Hollow Wheel
- 50: Sun Wheel
- 52: Sun Wheel Part
- 90: Torque Arm
- 120: Planet Carrier S1
- 124: Planet Carrier Front Bearing S1
- 126: Planet Carrier Rear Bearing S1
- 134: Planet Shaft S1
- 140: Planet Wheel S1
- 145: Hollow Wheel S1
- 150: Sun Wheel S1
- 190: Transition Housing 1-2

- 220: Planet Carrier S2
- 222: Main Body Part S2
- 223: Sun Wheel Part S2
- 224: Planet Carrier Front Bearing S2
- 226: Planet Carrier Rear Bearing S2
- 234: Planet Shaft S2
- 240: Planet Wheel S2
- 245: Hollow Wheel S2
- 250: Sun Wheel S2
- 260: Teeth Coupling S2
- 290: Transition Housing 2-3

- 320: Planet Carrier S3
- 322: Main Body Part S3
- 323: Sun Wheel Part S3
- 324: Planet Carrier Front Bearing S3
- 326: Planet Carrier Rear Bearing S3
- 334: Planet Shaft S3
- 340: Planet Wheel S3
- 345: Hollow Wheel S3
- 350: Sun Wheel S3
- 360: Teeth Coupling S3
- 370: Elastic Shaft Portion S3
- 390: High Speed Stage Housing

- 410: High Speed Intermediate Shaft
- 412: High Speed Intermediate Gear
- 424: High Speed Intermediate Shaft Front Bearing
- 426: High Speed Intermediate Shaft Rear Bearing
- 430: Teeth Coupling Intermediate Shaft
- 452: High Speed Gear
- 474: High Speed Shaft Front Bearing
- 476: High Speed Shaft Rear Bearing

## Claims

1. A wind turbine gearbox (7) for transmitting torque from a rotor (4) to a generator (9) comprising a gearbox axis (15) and two planet stages (12, 13, 14), a first planet stage (12,13) and a second planet stage (13,14), the second planet stage (13,14) running at higher speed than the first planet stage (12,13), each planet stage comprising
a planet carrier (20, 120, 220, 320),
at least three planet wheels (40, 140, 240, 340),
a hollow wheel (45, 145, 245, 345) and a sun wheel (50, 150, 250, 350), wherein the planet wheels (40, 140, 240, 340) mesh with both the hollow wheel (45, 145, 245, 345) and the sun wheel (50, 150, 250, 350),
wherein the planet carrier (20, 120, 220, 320) of the second planet stage (13, 14)comprises a main body part (22, 222, 322) and a sun wheel shaft part (23, 223, 323) connected to each other,
wherein the main body part (22, 222, 322) is on the generator side (29) of the planet carrier (20, 120, 220, 320) and the sun wheel shaft part (23, 223, 323) is on the rotor side (28) of the planet carrier (20, 120, 220, 320),
wherein the sun wheel shaft part (23, 223, 323) is meshing with the planet wheels (40, 140, 240) of the first planet stage (12,13),
wherein the main body part (22, 222, 322) and the sun wheel shaft part (23, 223, 323) of the planet carrier (20, 120, 220, 320) are joint by a rigid connection (21).

2. The wind turbine gearbox (7) according to claim 1, wherein the rigid connection (21) is a forged connection, a casted connection, a bolted connection, a welded connection or a press fit connection.

3. The wind turbine gearbox (7) according to one of the preceding claims, wherein the gearbox axis (15) in the normal operating position is oriented with less than 20 degrees, preferably less than 10 degrees offset to a horizontal plane.

4. The wind turbine gearbox (7) according to one of the preceding claims, wherein the planet carrier (20, 120, 220, 320) comprises a rotor side cheek (25) and a generator side cheek (26), wherein the rigid connection (21) is arranged either between the rotor side cheek (25) and the generator side cheek (26) or on the rotor side (28) of the rotor side cheek (25).

5. The wind turbine gearbox (7) according to one of the preceding claims, wherein the sun wheel shaft part (23, 223, 323) contains an elastic shaft portion (27, 370) with a decreased bending stiffness by at least 20%, preferably by more than 50% compared to the neighboring portions of the sun wheel shaft part (23, 223, 323).

6. The wind turbine gearbox (7) according to one of the preceding claims, wherein the main body part (22, 222, 322) and the sun wheel shaft part (23, 223, 323) are of a different material.

7. The wind turbine gearbox (7) according to one of the preceding claims, wherein the sun wheel shaft part (23, 223, 323) contains a sun wheel part (52) rigidly connected with the sun wheel shaft part (23, 223, 323), in particular the sun wheel part (52) being of a different material than the rest of the sun wheel shaft part (23, 223, 323).

8. The wind turbine gearbox (7) according to claim 6 or 7, wherein one of the materials consists of a casted iron or casted steel material and the other material consists of a forged material or a hardened material.

9. A wind turbine (1) comprising a gearbox (7) according to any of the preceding claims.

10. A method of mounting a wind turbine gearbox (7) with a gearbox axis (15), in particular according to one of the preceding claims, comprising the steps of:
- providing a planet carrier (20, 220, 320) comprising a main body part (22, 222, 322) and a sun wheel shaft part (23, 223, 323) which are joint by a rigid connection (21)
- mounting the planet carrier in a second planet stage (13, 14) of the wind turbine gearbox (7)
- joining the second planet stage (13, 14) of the wind turbine gearbox (7) with a first planet stage (12, 13) of the wind turbine gearbox (7) in a way that a sun wheel (50, 150, 250) of the sun wheel part (23, 223, 323) meshes with at least one planet wheel (40, 140, 240) of the first planet stage (12, 13) of the wind turbine gearbox (7), and
- arranging the wind turbine gearbox (7) in a normal operating position wherein the gearbox axis (15) is oriented with less than 20 degrees, preferably less than 10 degrees offset to a horizontal plane.

11. The method of mounting the wind turbine gearbox (7) according to claim 10, wherein the step of providing a planet carrier (20, 220, 320) comprises
- providing the main body part (22, 222, 322)
- providing the sun wheel shaft part (23, 223, 323), and
- joining the main body part (22, 222, 322) and the sun wheel shaft part (23, 223, 323) by a bolted connection, a welded connection or by a press fit connection to provide the rigid connection (21).

12. The method of mounting the wind turbine gearbox (7) according to claim 10, wherein the step of providing a planet carrier (20, 220, 320) comprises
- providing one of the main body part (22, 222, 322) or the sun wheel shaft part (23, 223, 323), and
- providing the other of the main body part (22, 222, 322) or the sun wheel shaft part (23, 223, 323) in a casting process, the casting process providing at the same time the rigid connection (21) to the one of the main body part (22, 222, 322) or the sun wheel shaft part (23, 223, 323).

13. The method of mounting the wind turbine gearbox (7) according to claim 10 to 12, wherein the step of providing the main body part (22, 222, 322) and/or the sun wheel shaft part (23, 223, 323) comprises providing the sun wheel shaft part (23, 223, 323) in a higher strength material and/or a harder material than the main body part (22, 222, 322).

14. The method of mounting the wind turbine gearbox (7) according to claim 10, wherein the step of providing a planet carrier (20, 220, 320) comprises
- providing the main body part (22, 222, 322) and the sun wheel shaft part (23, 223, 323) in one piece by a forging process or a casting process, and
- machining the planet carrier (20, 220, 320) in its final shape comprising a cutting process.
